# EUROPÄISCHE PATENTSCHRIFT

(11) **EP 3 282 181 B1**
(45) Veröffentlichungstag und Bekanntmachung des Hinweises auf die Patenterteilung: **25.08.2021**
(21) Anmeldenummer: 17181998.0
(22) Anmeldetag: 19.07.2017
(51) Int. Cl.: F21S 41/47, F21S 41/29, F21S 41/265

(54) **MIKROOPTIC - LINSEN AUF GLAS MIT GEDRUCKTER STRAHLENBLENDE - KONZEPT UND HERSTELLVERFAHREN**
MICROOPTIC LENSES ON GLASS WITH PRINTED DIAPHRAGM - CONCEPT AND PRODUCTION METHOD
LENTILLE MICRO-OPTIQUE SUR VERRE PRÉSENTANT UN CONCEPTION DE PROTECTION ET PROCÉDÉ DE FABRICATION

(30) Priorität: 29.07.2016 AT 506882016
(43) Veröffentlichungstag der Anmeldung: 14.02.2018
(73) Patentinhaber: ZKW Group GmbH, 3250 Wieselburg (AT)
(72) Erfinder: Gürtl, Josef, 3233 Kilb (AT); Mandl, Bernhard, 3200 Ober-Grafendorf (AT)
(74) Vertreter: Patentanwaltskanzlei Matschnig & Forsthuber OG

(56) Entgegenhaltungen:
- EP-A1- 2 693 108
- EP-A2- 2 799 762
- WO-A1-2015/058227
- WO-A2-2011/045324
- DE-A1- 10 308 703
- DE-A1-102009 024 894
- DE-A1-102014 219 371
- DE-A1-102014 223 933
- US-B1- 6 344 929

## Beschreibung

Die Erfindung betrifft eine Projektionseinrichtung für einen Kraftfahrzeugscheinwerfer nach dem Anspruch 1.

Des Weiteren betrifft die Erfindung ein Mikroprojektions-Lichtmodul für einen Kraftfahrzeugscheinwerfer, umfassend zumindest eine erfindungsgemäße Projektionseinrichtung, einen Fahrzeugscheinwerfer, insbesondere Kraftfahrzeugscheinwerfer, umfassend zumindest ein erfindungsgemäßes Mikroprojektions-Lichtmodul sowie ein Fahrzeug, insbesondere Kraftfahrzeug, mit zumindest einem erfindungsgemäßen Fahrzeugscheinwerfer.

Ferner betrifft die Erfindung ein Verfahren zur Herstellung einer erfindungsgemäßen Projektionseinrichtung für einen Kraftfahrzeugscheinwerfer nach dem Anspruch 14.

Aus dem Stand der Technik ist z.B. das Dokument AT 514967 B1 bekannt geworden, dass eine Projektionseinrichtungen der eingangs genannten Art zeigt. DE 10 2009 024894 A1 und DE 10 2014 223933 A1 offenbaren weitere Projektionseinrichtungen. Durch die zunehmende Miniaturisierung der Eintritts- und Austrittsoptiken werden die Optiken immer toleranzempfindlicher, da bisher zulässige Abweichungen von Absolutwerten der Optiken aufgrund der kleiner werdenden Abmessungen der Optiken zu immer höheren Relativfehlern führen. Bisher wurde versucht, Maßungenauigkeiten mit Hilfe verbesserter Fertigungsmethoden zu reduzieren.

Es wurde überraschenderweise festgestellt, dass nunmehr der Wärmeeintrag in die Projektionseinrichtung einen wesentlichen Einfluss auf deren optisches Verhalten hat. Durch Wärmeeintrag einer Lichtquelle sowie durch Lichtabsorption innerhalb der jeweiligen Optik oder Blendenvorrichtung können diese soweit erwärmt werden, dass die Projektionseinrichtung Abbildungsfehler verursacht. Dabei können Optiken und gegebenenfalls vorgesehene Blendenvorrichtungen aufgrund von Materialunterschieden unterschiedliche Wärmedehnungskoeffizienten aufweisen und sich unterschiedlich ausdehnen. Dieses Problem verstärkt sich umso mehr, wenn transparente Elemente wie die Eintrittsoptik und die Austrittsoptik sowie absorbierende Elemente wie gegebenenfalls vorgesehene Blendenvorrichtungen unter Wärmeeintrag voneinander abweichende Temperaturniveaus erreichen.

Es ist daher eine Aufgabe der Erfindung eine Projektionseinrichtung zu schaffen, bei der Abbildungsfehler trotz zunehmender Miniaturisierung weitgehend vermieden werden können. Diese Aufgabe wird mit einer Projektionseinrichtung der eingangs genannten Art gelöst, bei der erfindungsgemäß die Eintrittsoptik als auch die Austrittsoptik mit zumindest einem zwischen der Eintrittsoptik und der Austrittsoptik angeordneten lichtdurchlässigen Träger fest verbunden sind, wobei der zumindest eine Träger zumindest teilweise aus Glas besteht. Bei dem Glas kann es sich insbesondere um ein Mineralglas handeln, beispielsweise ein Flachglas, das unter der eingetragenen Markenbezeichnung "B270" der Firma Schott bekannt ist.

Durch die feste Verbindung der Eintrittsoptik und der Austrittsoptik mit zumindest einem zwischen den Optiken angeordneten lichtdurchlässigen Träger kann die Wärmedehnung der Eintrittsoptik und der Austrittsoptik stark reduziert und einander angeglichen oder an weitere Elemente der Projektionseinrichtung wie Blendenvorrichtungen angeglichen werden. Dabei ist es nicht zwingend erforderlich, dass die Eintritts- und die Austrittsoptik mit demselben Träger verbunden sind.

Die Formulierung "im Wesentlichen das gesamte .... austretende Licht" bedeutet dabei, dass danach getrachtet wird, tatsächlich den gesamten Lichtstrom, der aus einer Mikro-EintrittsOptik austritt, einzig in die zugeordnete Mikro-Austritts-Optik einzustrahlen. Falls dies auf Grund der Gegebenheiten nicht möglich sein sollte, so ist danach zu trachten, zumindest so wenig Lichtstrom in die benachbarten Mikro-Austritts-Optiken einzustrahlen, dass sich dadurch keine nachteiligen optischen Effekte, wie Streulicht, das zu Blendung führen kann etc., ergeben.

Außerdem ist unter Formulierung "wobei die Mikro-Eintrittsoptiken derart ausgebildet und/oder die Mikro-Eintrittsoptiken und die Mikro-Austrittsoptiken derart zueinander angeordnet sind" auch zu verstehen, dass zusätzliche Maßnahmen, wie etwa Blenden (siehe weiter unten) vorgesehen sein können, die entweder ausschließlich oder vorzugsweise zusätzlich zu ihrer eigentlichen Funktion noch die Funktion haben, dass der gesamte Lichtstrom genau auf die zugeordnete Mikro-Austritts-Optik gerichtet ist.

Durch die Verwendung einer Anzahl bzw. Vielzahl von einer zugeordneten Mikro-Optiken anstelle einer einzigen Optik wie in herkömmlichen Projektionssystemen sind sowohl die Brennweiten als auch die Abmessungen der Mikro-Optiken an sich deutlich geringer als bei einer "herkömmlichen" Optik. Ebenso kann die Mittendicke gegenüber einer herkömmlichen Optik reduziert werden. Dadurch kann die Bautiefe der Projektionseinrichtung gegenüber einer herkömmlichen Optik deutlich verringert werden.

Durch Erhöhung der Anzahl an Mikro-Optik-Systemen lässt sich einerseits der Lichtstrom erhöhen oder skalieren, wobei eine Grenze nach oben hinsichtlich der Anzahl der Mikro-Optik-Systeme in erster Linie durch die jeweils verfügbaren Herstellungsverfahren begrenzt ist. Für die Erzeugung einer Abblendlichtfunktion können z.B. 200 bis 400 Mikro-Optik-Systeme ausreichen bzw. günstig sein, wobei dies weder einen einschränkenden Wert nach oben oder unten sondern lediglich eine beispielhafte Anzahl beschreiben soll. Zur Erhöhung des Lichtstroms ist es günstig, die Anzahl gleichartiger Mikro-Optiken zu erhöhen. Umgekehrt kann man die Vielzahl an Mikro-Optiken dazu benutzen, um Mikro-Optiken unterschiedlichen optischen Verhaltens in ein Projektionssystem einzubringen, um unterschiedliche Lichtverteilungen zu erzeugen oder zu überlagern. Die Vielzahl von Mikro-Optiken erlaubt somit auch Gestaltungsmöglichkeiten, die bei einer herkömmlichen Optik nicht vorhanden sind.

Ein solches Lichtmodul ist außerdem skalierbar, d.h., es können mehrere baugleiche oder ähnlich aufgebaute Lichtmodule zu einem größeren Gesamtsystem, z.B. zu einem Fahrzeugscheinwerfer zusammengesetzt werden.

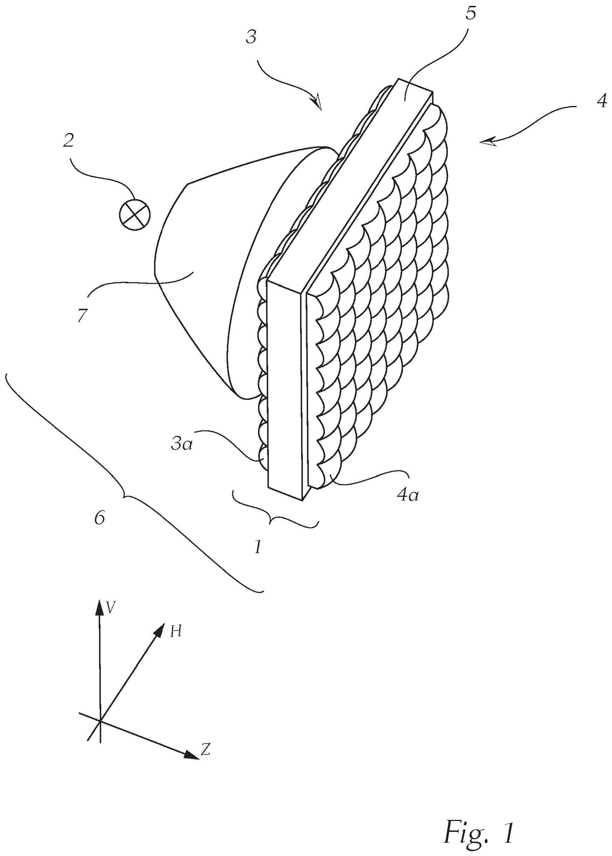

Bei einem herkömmlichen Projektionssystem mit einer Projektionslinse weist die Linse typische Durchmesser zwischen 60 mm und 90 mm auf. Bei einem erfindungsgemäßen Modul weisen die einzelnen Mikro-Optik-Systeme typische Abmessungen von ca. 2 mm x 2 mm (in V und H) und eine Tiefe (in Z, siehe z.B. Figur 1) von ca. 6mm - 10 mm auf, sodass sich in Z-Richtung eine deutlich geringere Tiefe eines erfindungsgemäßen Moduls im Vergleich zu herkömmlichen Modulen ergibt.

Das erfindungsgemäßen Lichtmodul bzw. die Projektionseinrichtung weisen eine geringe Bautiefe auf und sind grundsätzlich frei formbar, d.h. es ist z.B. möglich ein erstes Lichtmodul zur Erzeugung einer ersten Teillichtverteilung getrennt von einer zweiten Lichtmodul für eine zweite Teillichtverteilung auszugestalten und diese relativ frei, d.h. vertikal und/oder horizontal und/oder in der Tiefe zueinander versetzt anzuordnen, sodass sich auch Designvorgaben einfacher realisieren lassen.

Ein weiterer Vorteil eines erfindungsgemäßen Lichtmoduls ist jener, dass das exakte Positionieren der Lichtquelle(n) in Bezug auf die Projektionseinrichtung entfällt. Eine exakte Positionierung ist insofern nur noch von untergeordneter Bedeutung, als die zumindest eine Lichtquelle unter Umständen einen ganzen Array von Mikro-Eintritts-Optiken beleuchten kann, die alle im Wesentlichen dasselbe Lichtbild erzeugen. Anders formuliert bedeutet dies nichts anderes, als dass die "eigentliche" Lichtquelle von der oder den realen Lichtquelle(n) und dem Array der Mikro-Eintritts-Optiken gebildet ist. Diese "eigentliche" Lichtquelle beleuchtet dann die Mikro-Austritts-Optiken und gegebenenfalls die zugeordneten Blenden. Nachdem nun aber die Mikro- Eintritts- und Mikro-Austritts-Optiken bereits optimal aufeinander abgestimmt sind, da diese quasi ein System bilden, fällt eine nicht exakte Positionierung der realen Lichtquelle(n) weniger ins Gewicht. Die realen Lichtquellen sind beispielsweise annähernd punktförmige Lichtquellen wie z.B. Leuchtdioden, deren Licht von Kollimatoren wie Compound Parabolic Concentrators (CPC) oder TIR-Linsen (Total Inner Reflection) parallel gerichtet wird.

Erfindungsgemäß ist es vorgesehen, dass zwischen der Eintrittsoptik und der Austrittsoptik zwei einander gegenüberliegende zueinander beabstandete Träger angeordnet sind, wobei die Eintrittsoptik und die Austrittsoptik mit jeweils einem der Träger fest verbunden sind. Der Beabstandung der Träger erfolgt dabei in Richtung der optischen Achse der Eintritts- und der Austrittsoptik, wobei die optischen Achsen der Eintrittsoptik und der Austrittsoptk miteinander in Lage und Orientierung übereinstimmen. Die Eintrittsoptik ist daher in dieser Variante der Erfindung mit einem Träger und die Austrittsoptik mit einem anderen Träger verbunden, wodurch beispielsweise eine verbesserte Kühlung der Optiken ermöglicht wird. Zudem kann vorgesehen sein, dass die Eintrittsoptik und die Austrittsoptik jeweils zumindest eine optische Achse aufweisen, wobei die optischen Achsen parallel zueinander orientiert sind, wobei einer der beiden Träger in Bezug auf den verbleibenden Träger normal zu einer der zueinander parallelen optischen Achse verschiebbar ist. In Abhängigkeit davon, in welche Richtung ein Träger in Bezug auf den verbleibenden Träger verschoben wird, kann das durch die Austrittsoptik abgebildete Lichtbild gezielt beeinflusst werden. Wird die Projektionseinrichtung beispielsweise in einem Kraftfahrzeugscheinwerfer eingesetzt, so kann eine horizontale Verschiebung eines Trägers in Bezug zu dem verbleibenden Träger zur Umsetzung eines Kurvenlichtes herangezogen werden. Eine vertikale Verschiebung eines Trägers in Bezug auf den verbleibenden Träger könnte wiederum zur Leuchtweitenregulierung eingesetzt werden.

Alternativ dazu kann vorgesehen sein, dass zwischen den zwei einander gegenüberüberliegenden, die Eintrittsoptik bzw. die Austrittsoptik tragenden Trägern ein dritter lichtdurchlässiger Träger angeordnet ist, mit dem die ersten beiden Träger fest verbunden sind.

Alternativ dazu kann vorgesehen sein, dass zwischen der Eintrittsoptik und der Austrittsoptik genau ein Träger angeordnet ist, wobei sowohl die Eintrittsoptik als auch die Austrittsoptik an einander gegenüberliegenden Seiten des Trägers mit dem Träger fest verbunden sind. Diese Anordnung ermöglicht eine besonders maßgenaue und wärmedehnungsunempfindliche Implementierung einer Projektionseinrichtung, da die Wärmedehnung der Eintritts- und Austrittsoptik miteinander über den gemeinsamen Träger angeglichen wird. Zudem führt diese Anordnung dazu, dass die Temperaturunterschiede zwischen der Eintritts- und der Austrittsoptik sowie gegebenenfalls vorgesehener Blendenvorrichtungen vergleichsweise gering sind, wodurch das Wärmedehnungsverhalten der genannten Komponenten zusätzlich einander angeglichen werden kann. Dabei kann es günstig sein, wenn die Eintrittsoptik und/oder die Austrittsoptik einstückig mit dem Träger, insbesondere aus demselben Material, ausgebildet sind. Eine Blendenvorrichtung könnte beispielsweise innerhalb des Trägers oder einer der Optiken ausgebildet werden. Zu diesem Zweck könnte beispielsweise die Blendenvorrichtung mittels eines Laser- oder Elektronenstrahls "eingebrannt" bzw. strukturiert werden.

Erfindungsgemäß ist die feste Verbindung der Eintrittsoptik und der Austrittsoptik mit dem zumindest einen Träger jeweils als transparente Klebeverbindung ausgebildet. Die Klebeverbindung ist vorzugsweise mittels eines UV-härtenden Klebstoffes realisiert. Insbesondere können die Mikro-Eintrittsoptik oder die Mikro-Austrittsoptik und deren jeweilige Verbindung zum Träger aus UV-härtendem Kleber bestehen und in einem Bearbeitungsschritt geformt werden.

Um unerwünschte Verluste und störende lichtablenkende Effekte an und innerhalb der Klebeverbindung zu vermeiden, kann vorgesehen sein, dass die Dicke der Klebeverbindung in Richtung der optischen Achse der Eintritts- oder Austrittsoptik maximal 20 Mikrometer beträgt und das Verhältnis der Brechungsindizes des für die Klebeverbindung eingesetzten Materials im ausgehärteten Zustand der Klebeverbindung und des Materials des Trägers zwischen 0,9 und 1,1 liegt.

Zur Beschneidung des Lichtbildes der Projektionseinrichtung kann vorgesehen sein, dass auf der der Eintrittsoptik zugewandten Seite zumindest eines Trägers eine erste Blendenvorrichtung angeordnet ist.

Alternativ oder auch ergänzend dazu kann vorgesehen sein, dass an einer von der Eintrittsoptik abgewandten Seite zumindest eines Trägers eine Blendenvorrichtung angeordnet ist, wodurch ermöglicht wird, dass die Dicke des Trägers so gewählt werden kann, dass die Blendenvorrichtung in einer vor der Eintrittsoptik befindlichen Brennebene der Eintrittsoptik liegt.

Um ein Übersprechen zwischen benachbarten Mikrooptiken zu vermeiden, kann zu dem vorgesehen sein, dass auf der der Austrittsoptik zugewandten Seite zumindest eines Trägers eine zweite Blendenvorrichtung angeordnet ist.

Alternativ oder auch ergänzend dazu kann vorgesehen sein, dass an der Austrittsoptik abgewandten Seite zumindest eines Trägers eine Blendenvorrichtung angeordnet ist, wodurch es durch eine Anpassung der Dicke des Trägers ermöglicht ist, die Blendenvorrichtung genau in die Brennebene einer Austrittsoptik zu legen.

Insbesondere kann vorgesehen sein, dass zumindest eine Blendenvorrichtung als eine auf den zumindest einen Träger aufgedampfte lichtundurchlässige Metallschicht zur Formung des Lichtbildes der Projektionseinrichtung ausgebildet ist.

Ergänzend oder alternativ dazu kann vorgesehen sein, dass zumindest eine Blendenvorrichtung als eine auf den zumindest einen Träger aufgedruckte lichtundurchlässige Lackschicht zur Formung des Lichtbildes der Projektionseinrichtung ausgebildet ist. Eine Strukturierung der bedampften Schicht könnte erfolgen, indem durch eine Maske aufgedampft wird oder (bevorzugt zur Erhöhung der Positionsgenauigkeit) die ganzflächige Schicht nach der Bedampfung bereichsweise beispielsweise durch Überstreichen mit Laserstrahl abgelöst wird.

Besonders günstig kann es sein, wenn der Träger vollständig aus transparenten Glas besteht.

Zudem kann vorgesehen sein, dass die Mikro-Eintrittsoptik und/oder die Mikro-Austrittsoptik aus Kunststoff besteht, der insbesondere transparent ist wie z.B. UV-härtender Kleber.

Ein weiterer Aspekt Erfindung betrifft ein Mikroprojektions-Lichtmodul für einen Kraftfahrzeugscheinwerfer, umfassend zumindest eine erfindungsgemäße Projektionseinrichtung sowie zumindest eine Lichtquelle zur Einspeisung von Licht in die Projektionseinrichtung.

Insbesondere von Vorteil ist die Erfindung, wenn die zumindest eine Lichtquelle zumindest eine Halbleiterlichtquelle, z.B. zumindest eine Leuchtdiode und/oder zumindest eine Laserdiode umfasst. Die eigentliche Lichtquelle kann in letzterem Fall, d.h. im Fall der Verwendung von zumindest einer Laserdiode ein Leuchtelement sein oder ein oder mehrere Leuchtelemente umfassen (Leuchtelement z.B. in Form eines sogenannten "Phosphors", einer Optokeramik, etc.), welche(s) von einem Laser, d.h. einer Laserdiode angestrahlt und zur Emission von Licht angeregt wird. Für IR Licht wird eine entsprechende IR-Diode verwendet. Ein weiterer Aspekt Erfindung betrifft einen Fahrzeugscheinwerfer, insbesondere einen Kraftfahrzeugscheinwerfer, umfassend zumindest ein erfindungsgemäßes Mikroprojektions-Lichtmodul.

Zudem betrifft die Erfindung ein Fahrzeug, insbesondere Kraftfahrzeug, mit zumindest einem erfindungsgemäßen Fahrzeugscheinwerfer.

In einem weiteren Aspekt der Erfindung wird die eingangs genannte Aufgabe mit einem Verfahren zur Herstellung einer Projektionseinrichtung für einen Kraftfahrzeugscheinwerfer gelöst, wobei die Projektionseinrichtung zur Abbildung von Licht zumindest einer der Projektionseinrichtung zugeordneten Lichtquelle in einem Bereich vor einem Kraftfahrzeug in Form zumindest einer Lichtverteilung eingerichtet ist, umfassend die folgenden Schritte:
a) Aufbringen einer ersten Blendenvorrichtung auf einer ersten Flachseite oder einer zweiten Flachseite eines flächigen lichtdurchlässigen Trägers, wobei der Träger zumindest teilweise aus Glas besteht,
b) Befestigen oder Aufbringen einer Eintrittsoptik, welche eine Anzahl von Mikro-Eintrittsoptiken aufweist, welche vorzugsweise in einem Array angeordnet sind, auf der ersten Flachseite des Trägers, wobei die Eintrittsoptik die erste Blendenvorrichtung zumindest teilweise überdeckt und dergestalt angeordnet ist, dass Licht über die Eintrittsoptik durch die erste Blendenvorrichtung zumindest teilweise in den Träger eintreten kann oder nach Ein- und Durchtritt durch den Träger durch die erste Blendenvorrichtung zumindest teilweise austreten kann, und die Befestigung der Eintrittsoptik an der ersten Flachseite des Trägers mittels eines lichtdurchlässigen Klebstoffes erfolgt,
c) Aufbringen einer zweiten Blendenvorrichtung auf einer der ersten Flachseite gegenüberliegenden zweiten Flachseite auf einer Flachseite eines weiteren Trägers,
d) Befestigen oder Aufbringen einer Austrittsoptik, welche eine Anzahl von Mikro-Austrittsoptiken aufweist, welche vorzugsweise in einem Array angeordnet sind, auf der zweiten Flachseite des weiteren Trägers, wobei die Austrittsoptik die zweite Blendenvorrichtung zumindest teilweise überdeckt und dergestalt angeordnet ist, dass den weiteren Träger durchdringendes Licht über die zweite Blendenvorrichtung in die Austrittsoptik eintreten und durch die Austrittsoptik hindurch austreten kann oder über die zweite Blendenvorrichtung in den weiteren Träger eintretendes Licht durch den weiteren Träger durchtreten und durch Austrittsoptik austreten kann und die Befestigung der Austrittsoptik an einer Flachseite des weiteren Trägers mittels eines lichtdurchlässigen Klebstoffes erfolgt.

Das Befestigen der Mikro-Eintrittsoptiken und/oder Mikroaustrittsoptiken kann mittels eines transparenten Klebers erfolgen. Alternativ dazu kann eine Eintrittsoptik oder Austrittsoptik ebenso aus transparenten Kleber bestehen, insbesondere aus demselben transparenten Kleber, mittels welchem die jeweilige Optik an dem jeweiligen Träger befestigt wird. In diesem Fall kann die Eintrittsoptik oder Austrittsoptik an dem jeweiligen Träger "aufgebracht" werden, so dass das Befestigen und Ausformen in einem Schritt des Aufbringens erfolgt. Dazu geeignete Prozesse sind beispielsweise das sogenannte Prägen oder Spritzprägen.

Das Aufbringen der Blendenvorrichtungen kann z.B. mittels Siebdruck oder metallischer Bedampfung erfolgen oder alternativ dazu mittels Laser- oder Elektronenstrahl, der die Blendenvorrichtung in den jeweiligen optischen Körper "brennt" bzw. diesen strukturiert, durchgeführt werden.

Zur genauen Positionierung der ersten Blendenvorrichtung kann vorgesehen sein, dass vor der Durchführung des Schritts b) die Position der ersten Blendenvorrichtung optisch erfasst wird und die Befestigung der Eintrittsoptik gemäß dem nachfolgenden Schritt b) unter Berücksichtigung der optischen Erfassung der Position der ersten Blendenvorrichtung erfolgt. Gleichermaßen kann vorgesehen sein, dass vor der Durchführung des Schritts d) die Position der zweiten Blendenvorrichtung optisch erfasst wird und die Befestigung der Austrittsoptik gemäß dem nachfolgenden Schritt d) unter Berücksichtigung der optischen Erfassung der Position der zweiten Blendenvorrichtung erfolgt.

Zu diesem Zweck können Positionsmarken und/oder Passmarken an den jeweiligen Träger und/oder der jeweiligen Blendenvorrichtung vorgesehen sein. Alternativ könnte die Linsenkontur der jeweiligen Optik (Eintritts- oder Austrittsoptik) optisch erfasst werden. Denkbar wäre auch eine (aktive) Ausrichtung unter Zuhilfenahme von in die Optik eingebrachtem Licht, wobei auf die Blendenvorrichtung bzw. den Lichtdurchtritt die die Blendenvorrichtung referenziert werden kann.

Die Blendenvorrichtungen können auch mittels transparenten Kleber versiegelt werden, was im Falle einer Anordnung, bei der zwei Träger vorgesehen sind, zwischen denen ein Spalt besteht, besonders günstig ist.

Bei einem für die Eintritts- und/oder Austrittsoptik eingesetztem Material kann es sich beispielsweise um Floatglas handeln, dass in Richtung der optischen Achse Dickenunterschiede bis zu 150 um aufweisen kann. Diese Unebenheiten können durch unterschiedliche Dicke des Klebers ausgeglichen werden, wobei das Verhältnis der Brechungsindizes des für die Klebeverbindung eingesetzten Materials im ausgehärteten Zustand der Klebeverbindung und des Materials des Trägers, also der Wert des Quotienten gebildet durch den Brechungsindex der Klebeverbindung dividiert durch den Brechungsindex des Materials des Trägers, zwischen 0,9 und 1,1 liegt.

Die Erfindung wird im Folgenden anhand beispielhafter und nicht einschränkender Ausführungsformen näher erläutert, die in den Figuren veranschaulicht sind. Darin zeigen
Figur 1 eine schematische Darstellung einer ersten Ausführungsform eines erfindungsgemäßen Mikroprojektions-Lichtmoduls,
Figur 2 eine schematische Darstellung einer zweiten Ausführungsform eines erfindungsgemäßen Mikroprojektions-Lichtmoduls,
Figur 3 eine schematische Darstellung einer dritten Ausführungsform eines nicht erfindungsgemäßen Mikroprojektions-Lichtmoduls,
Figuren 4 (a) bis (h) eine schematische Darstellung eines Verfahrens zur Herstellung einer erfindungsgemäßen Projektionseinrichtung,
Figuren 5 (a) bis (l) eine schematische Darstellung eines Verfahrens zur Herstellung der dritten Ausführungsform eines Mikroprojektions-Lichtmoduls gemäß Figur 3,
Figur 6 eine Darstellung einer Möglichkeit zur exakten Positionierung der Eintritts- und der Austrittsoptik sowie der Blendenvorrichtungen, und
Figur 7 eine Darstellung einer Möglichkeit zur exakten Positionierung einer Eintrittsoptik auf einen Träger sowie einer gegenüberliegenden Blendenvorrichtung.

In den folgenden Figuren bezeichnen - sofern nicht anders angegeben - gleiche Bezugszeichen gleiche Merkmale.

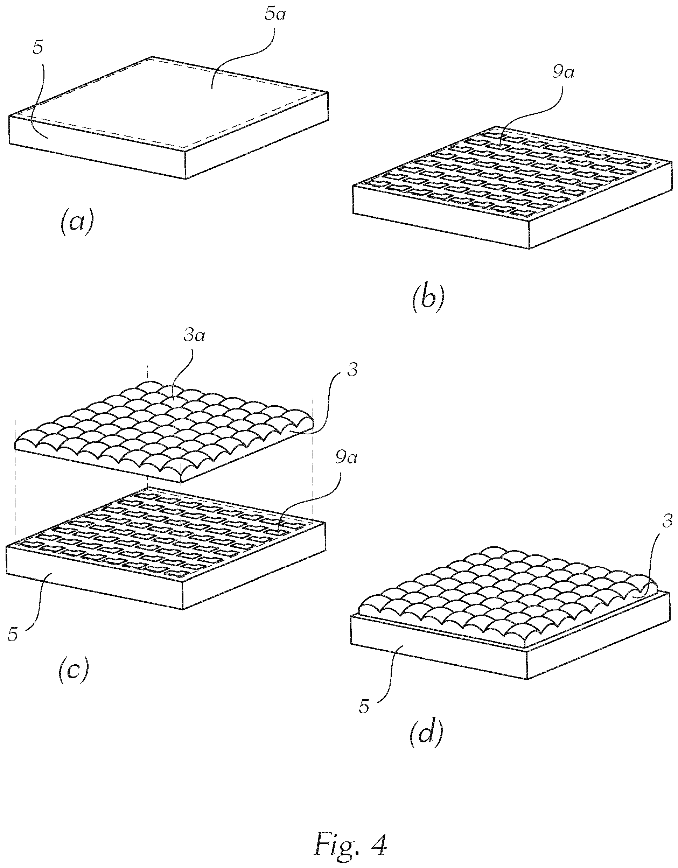

Figur 1 zeigt schematisch eine Ausführungsform einer erfindungsgemäßen Projektionseinrichtung 1 für einen Kraftfahrzeugscheinwerfer. Die Projektionseinrichtung 1 ist zur Abbildung von Licht zumindest einer der Projektionseinrichtung 1 zugeordneten Lichtquelle 2 in einem Bereich vor einem Kraftfahrzeug in Form zumindest einer Lichtverteilung eingerichtet. Die Projektionseinrichtung 1 umfasst eine Eintrittsoptik 3, welche eine Anzahl von Mikro-Eintrittsoptiken 3a aufweist, welche vorzugsweise in einem Array angeordnet sind, eine Austrittsoptik 4, welche eine Anzahl von Mikro-Austrittsoptiken 4a aufweist, welche vorzugsweise in einem Array angeordnet sind, wobei jeder Mikro-Eintrittsoptik 3a genau eine Mikro-Austrittsoptik 4a zugeordnet ist, wobei die Mikro-Eintrittsoptiken 3a, 4a derart ausgebildet und/oder die Mikro-Eintrittsoptiken 3a und die Mikro-Austrittsoptiken 4a derart zueinander angeordnet sind, dass im Wesentlichen das gesamte aus einer Mikro-Eintrittsoptik 3a austretende Licht genau nur in die zugeordnete Mikro-Austrittsoptik 4a eintritt. Dabei wird das von den Mikro-Eintrittsoptiken 3a vorgeformte Licht von den Mikro-Austrittsoptiken 4a in einen Bereich vor dem Kraftfahrzeug als zumindest eine Lichtverteilung abgebildet bzw. sind Optiken eben dazu eingerichtet. Die Eintrittsoptik 3 als auch die Austrittsoptik 4 sind gemäß der ersten Ausführungsform der Erfindung mit genau einem zwischen der Eintrittsoptik 3 und der Austrittsoptik 4 angeordneten lichtdurchlässigen Träger 5 fest verbunden sind, wobei der Träger 5 zumindest teilweise aus Glas besteht. Damit kann das Wärmedehnungsverhalten der Eintrittsoptik 3 und der Austrittsoptik 4, die üblicherweise aus Kunststoff bestehen, optimiert werden. Insbesondere können unerwünschte Positionsänderungen der Mikrooptiken 3a und 4a zueinander sowie in Bezug auf in Fig. 1 nicht dargestellten und im Zuge der Figuren 4 (a) bis 4 (h) diskutierten Blendenvorrichtungen verhindert werden.

Figur 1 zeigt zudem ein Mikroprojektions-Lichtmodul 6, das die Projektionseinrichtung 1 sowie zumindest eine Lichtquelle 2 zur Einspeisung von Licht in die Projektionseinrichtung 1 umfasst. Die dargestellten Koordinaten bezeichnen die Lichtaustrittsrichtung Z, die horizontale Richtung H, welche normal auf Z und normal auf die vertikale Richtung V steht.

Bei der Lichtquelle 2 handelt es sich vorzugsweise um eine Halbleiterlichtquelle, beispielsweise um eine LED-Lichtquelle, welche eine oder mehrere LEDs aufweist. Die Lichtquelle kann auch aus einer oder mehreren Laserdioden bestehen.

Das Mikroprojektions-Lichtmodul 6 kann ebenso eine Vorsatzoptik 7 umfassen, in die die Lichtquelle 2 strahlt. Bei der Vorsatzoptik 7 kann es sich beispielsweise um einen Kollimator handeln, welcher das Licht der Lichtquelle 2 im Wesentlichen parallel richtet, bevor es auf die Projektionseinrichtung 1 auftrifft. Am Kollimator könnten Halterungen angeformt sein, die mit der Projektionseinrichtung 1 zur Halterung an derselben, insbesondere an dem Träger 5, zusammen wirken können.

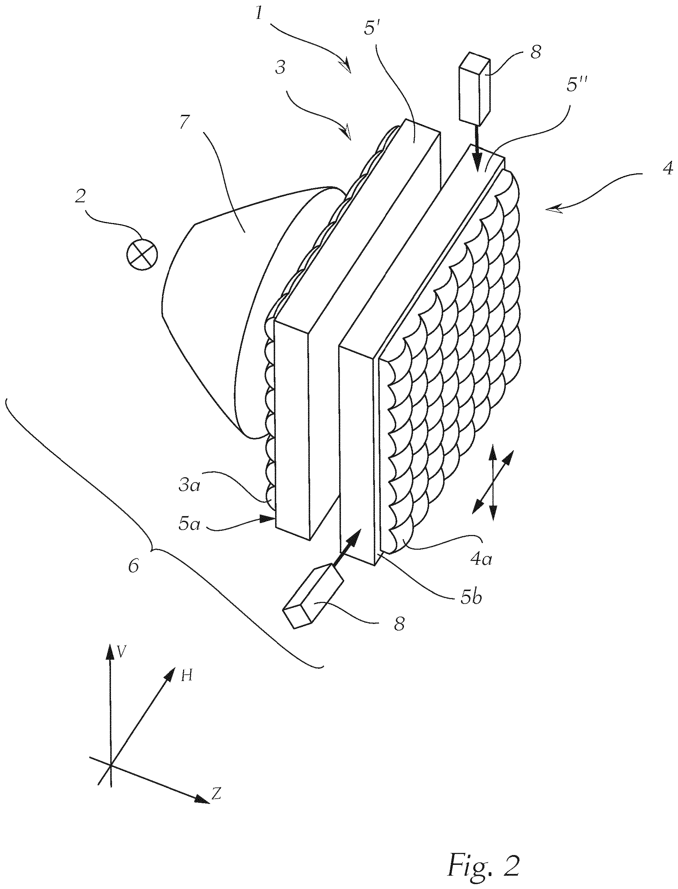

Figur 2 zeigt eine schematische Darstellung einer zweiten Ausführungsform eines erfindungsgemäßen Mikroprojektions-Lichtmoduls 6, bei der im Gegensatz zur ersten Ausführungsform zwei Träger 5' und 5" vorgesehen sind. Die Träger 5' und 5" sind zwischen der Eintrittsoptik 3 und der Austrittsoptik 4 angeordnet und liegen einander gegenüber, wobei die Eintrittsoptik 3 und die Austrittsoptik 4 mit jeweils einem der Träger fest verbunden sind.

Die Eintrittsoptik 3 und die Austrittsoptik 4 weisen jeweils zumindest eine optische Achse auf, wobei die optischen Achsen parallel zueinander orientiert sind, wobei im vorliegenden Beispiel die Orientierung dieser optischen Achsen mit der Orientierung der Achse z zusammenfällt. Im vorliegenden Beispiel ist zudem einer der beiden Träger, nämlich der Träger 5" in Bezug auf den verbleibenden Träger normal zur optischen Achse verschiebbar, wobei die Verschiebung beispielsweise mittels Piezostellgliedern 8 vorgegeben werden kann. Durch eine horizontale Verschiebung kann das durch die Projektionseinrichtung 1 erzeugte Lichtbild horizontal verschoben bzw. abgelenkt werden, wodurch eine Kurvenlichtfunktion umgesetzt werden kann. Durch eine vertikale Verschiebung kann das durch die Projektionseinrichtung 1 erzeugte Lichtbild vertikal verschoben bzw. abgelenkt werden, wodurch beispielsweise eine Leuchtweitenregulierung umgesetzt werden kann.

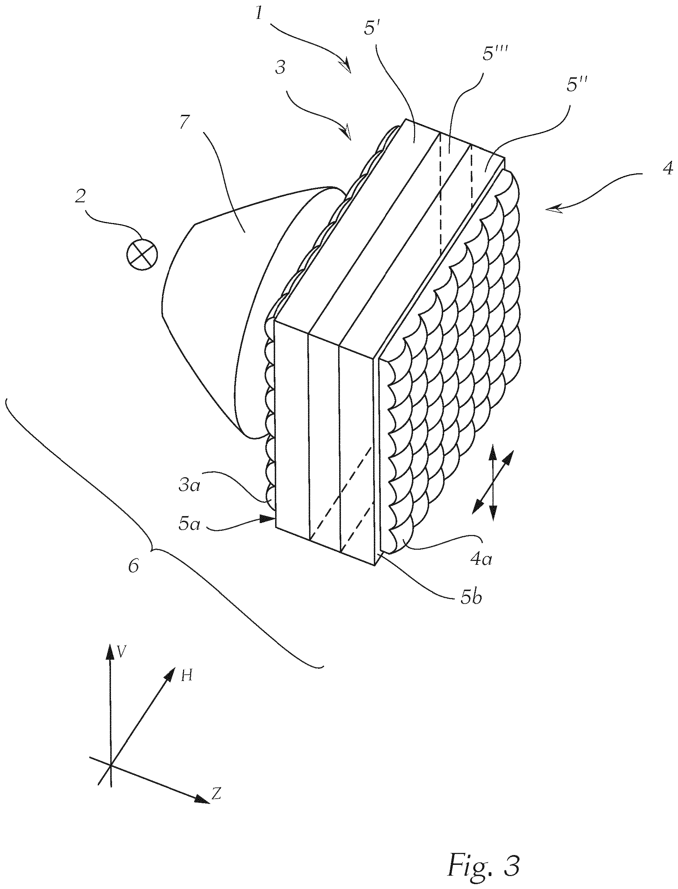

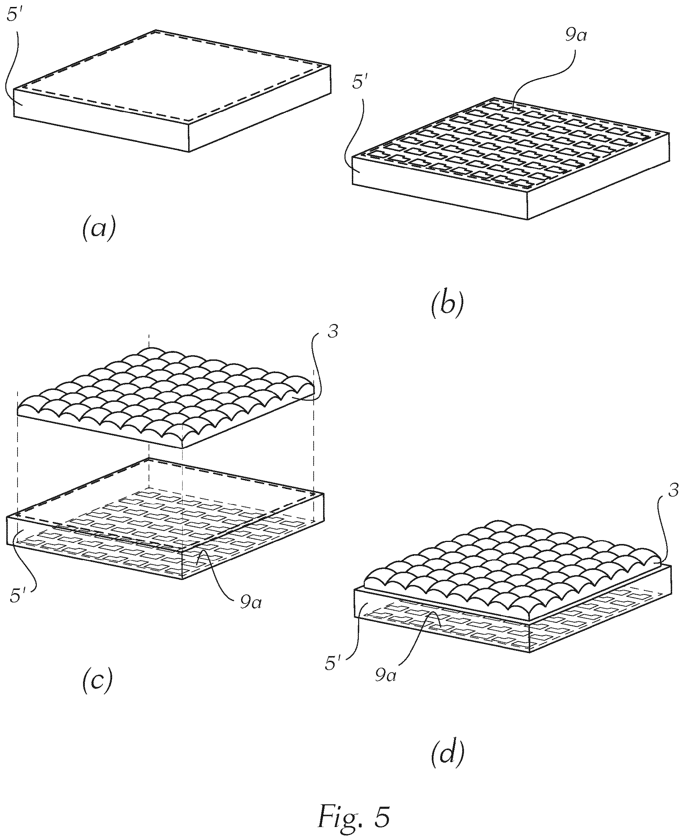

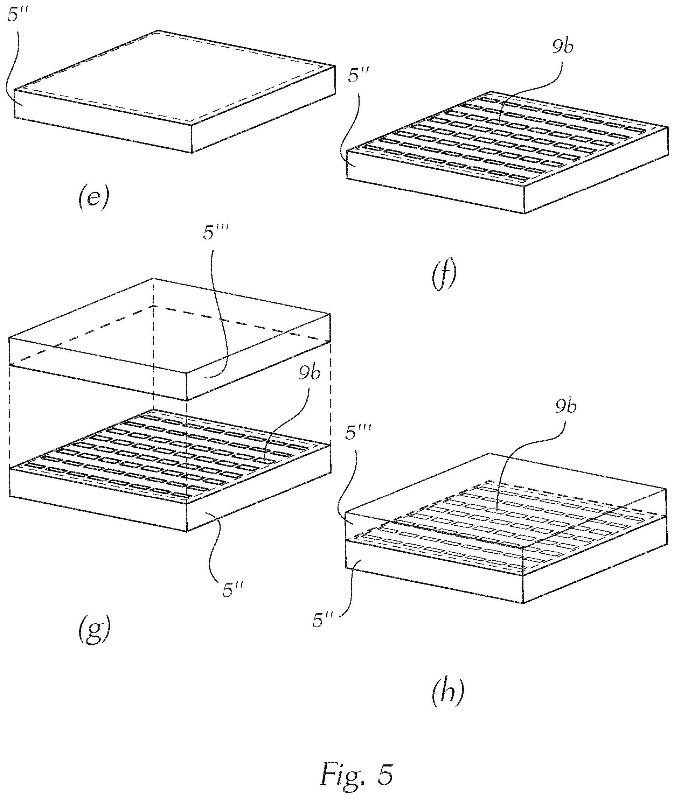

Figur 3 zeigt eine schematische Darstellung einer dritten Beispiels eines Mikroprojektions-Lichtmoduls 6. Darin ist ein dritter Träger 5''' dargestellt, der zwischen dem ersten Träger 5' und dem zweiten Träger 5" angeordnet ist. Diese Ausgestaltung erlaubt, wie nachfolgend zu den Figuren 5 (a) bis (h) erörtert wird, der ersten Blendenvorrichtung 9a (siehe z.B. Figur 5 (b) bis (d)) an der der Eintrittsoptik 3 abgewandten Seite des ersten Trägers 5' anzuordnen. Auf diese Weise kann ist es möglich, Eintrittsoptiken 3 einzusetzen, bei denen die Brennebene der Eintrittsoptik 3 von der Austrittsfläche der Eintrittsoptik in Richtung der Abstrahlrichtung beabstandet ist. Die erste Blendenvorrichtung 9a kann trotzdem genau in der Brennebene der Eintrittsoptik 3 liegen, indem beispielsweise die Dicke des Trägers 5' entsprechend gewählt wird, sodass die von der Eintrittsoptik 3 abgewandte Seite des ersten Trägers 5' in der Brennebene der Eintrittsoptik 3 liegt. Dies ist vorteilhaft, da Eintrittsopitken , bei denen die Brennebene direkt an der Austrittsfläche der Eintrittsopitk liegt, aufgrund der hierfür erfordlichen starken Krümmungen der Optiken schwieriger realisiert werden können und unter Umständen eine geringere Effizienz aufweisen. Zudem erweitert die Anordnung der ersten Blendenvorrichtung 9a an der von der Eintrittsoptik 3 abgewandten Seite des ersten Trägers 5' die Freiheitsgrade bei der Auslegung der Optik. Bei Veränderung der Brennweite, die beispielsweise durch Variation der Krümmung der Optiken erfolgen könnte, kann die Strahlenblende durch Anpassung der Trägerdicke (alternativ der Dicke des Klebers) jeweils in die Brennebene gelegt werden.

Um eine formstabile Projektionseinrichtung 1 zu schaffen, die besonders unempfindlich gegenüber Temperaturänderungen ist, kann zudem vorgesehen sein, dass der dritte Träger 5''', wie in Figur 3 gezeigt, als zwischen dem ersten und dem zweiten Träger 5' bzw. 5" liegendes "Zwischenstück" ausgebildet ist, das mit den beiden Trägern 5' und 5" fest verbunden sein kann. Der dritte Träger 5''' ist selbstverständlich ebenso lichtdurchlässig ausgeführt.

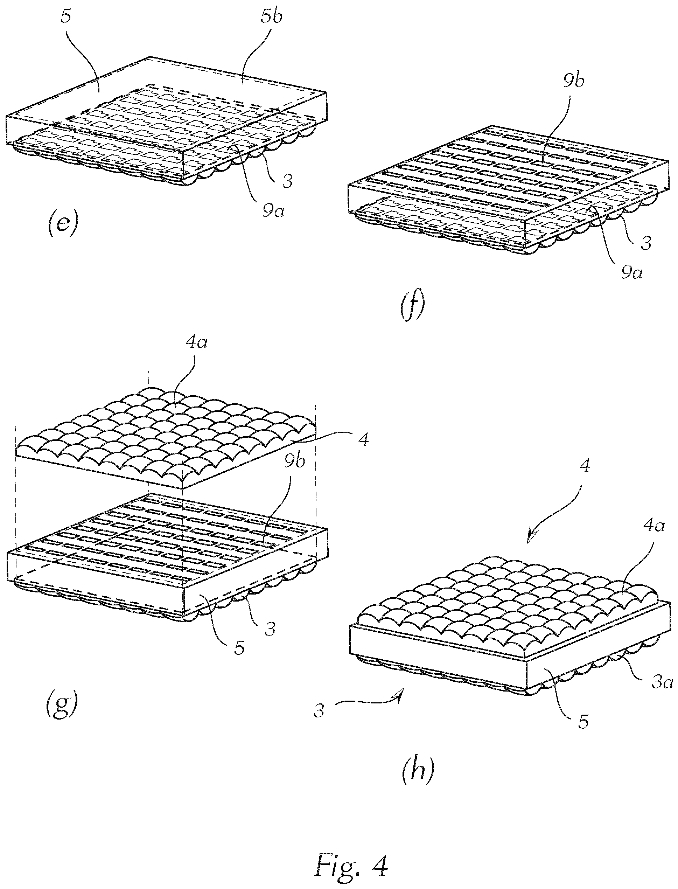

Figuren 4 (a) bis (h) zeigen eine schematische Darstellung eines Verfahrens zur Herstellung einer erfindungsgemäßen Projektionseinrichtung 1 für einen Kraftfahrzeugscheinwerfer gemäß der erstgenannten Ausführungsform, wobei die Projektionseinrichtung 1 zur Abbildung von Licht zumindest einer der Projektionseinrichtung 1 zugeordneten Lichtquelle 2 in einem Bereich vor einem Kraftfahrzeug in Form zumindest einer Lichtverteilung eingerichtet ist. Figur 4 (a) zeigt einen Träger 5 mit einer ersten Flachseite 5a, auf den in Figur 4 (b) eine erste Blendenvorrichtung 9a, beispielsweise durch Siebdruck oder metallische Bedampfung, aufgebracht wird, wobei der Träger 5 zumindest teilweise aus Glas besteht. Figur 4 (c) zeigt den nächst Schritt b) des Verfahrens, nämlich das Befestigen einer Eintrittsoptik 3, welche eine Anzahl von Mikro-Eintrittsoptiken 3a aufweist, welche vorzugsweise in einem Array angeordnet sind, auf der ersten Flachseite 5a des Trägers 5, wobei die Eintrittsoptik 3 die erste Blendenvorrichtung 9a zumindest teilweise überdeckt und dergestalt angeordnet ist, dass Licht über die Eintrittsoptik 3 durch die erste Blendenvorrichtung 9a zumindest teilweise in den Träger 5 eintreten kann, und die Befestigung der Eintrittsoptik 3 an der ersten Flachseite 5a des Trägers 5 mittels eines lichtdurchlässigen Klebstoffes erfolgt. Figur 4 (d) zeigt einen Zustand, in dem Eintrittsoptik 3 bereits fest mit dem Träger 5 verbunden ist. Nachfolgend kann gemäß Schritt c) das Aufbringen einer zweiten Blendenvorrichtung 9b auf einer der ersten Flachseite 5a gegenüberliegenden zweiten Flachseite 5b des Trägers 5 (oder eines weiteren Trägers 5" im Falle der zweiten vorgenannten Ausführungsform), erfolgen (siehe Figur 4 (f)). Figur 4 (e) zeigt sowie die fortfolgenden Figuren 4 (f) bis 4 (h) die Projektionseinrichtung 1 von einer umgedrehten Seite. Anschließend folgt der Schritt d), nämlich das Befestigen einer Austrittsoptik 4 auf der zweiten Flachseite 5b des Trägers 5 (oder des weiteren Trägers 5"), welche Austrittsoptik 4 eine Anzahl von Mikro-Austrittsoptiken 4a aufweist, welche vorzugsweise in einem Array angeordnet sind, wobei die Austrittsoptik 4 die zweite Blendenvorrichtung 9b zumindest teilweise überdeckt und dergestalt angeordnet ist, dass den Träger 5 (bzw. den weiteren Träger 5") durchdringendes Licht über die zweite Blendenvorrichtung 9b in die Austrittsoptik 4 und durch diese hindurch austreten kann. Die Befestigung der Austrittsoptik 4 erfolgt an der zweiten Flachseite 5b des Trägers 5 (bzw. des weiteren Trägers 5") mittels eines lichtdurchlässigen Klebstoffes, der vorzugsweise UVhärtend ausgeführt ist (siehe Figur 4 (g)).

Figur 4 (h) zeigt ein erfindungsgemäßes Projektionsmodul 1 im Sinne der vorgenannten ersten Ausführungsform in einem Endzustand.

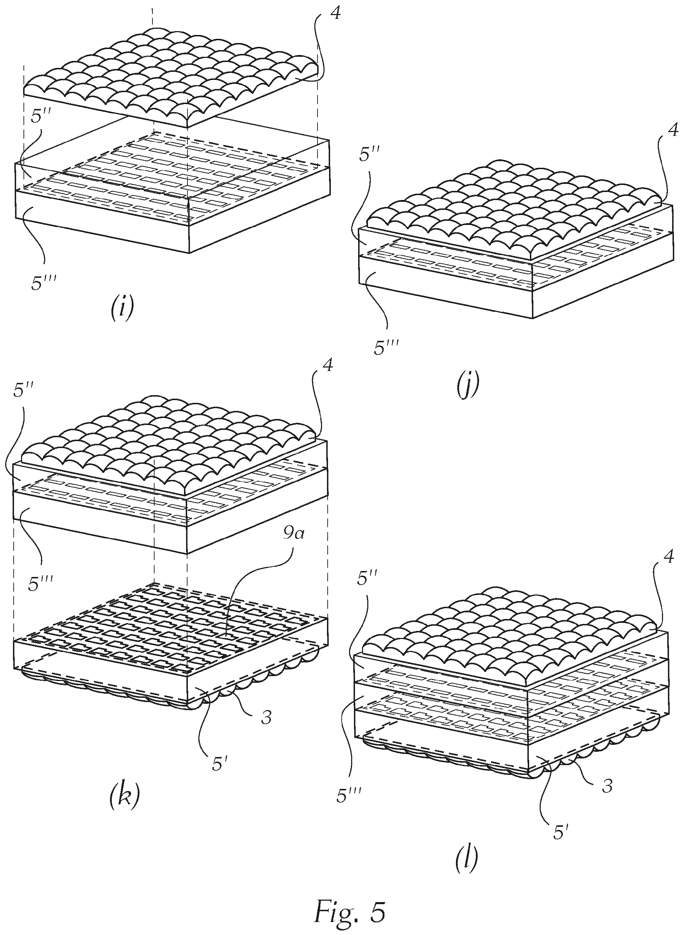

Figuren 5 (a) bis (1) zeigen eine schematische Darstellung eines Verfahrens zur Herstellung der dritten Ausführungsform einer Projektionseinrichtung gemäß Figur 3, das prinzipiell ähnlich wie das zuvor beschriebene Verfahren nach den Figuren 4 (a) bis 4 (h) abläuft. Im Gegensatz zu dem vorgenannten Verfahren ist darin ein Verfahren zur Herstellung einer Projektionseinrichtung 1 nach Figur 3 beschrieben, bei der ein dritter Träger 5''' vorgesehen ist, der zwischen dem ersten und dem zweiten Träger 5' bzw. 5" liegt. Die Blendenvorrichtungen 9a bzw. 9b sind darin jeweils an der der jeweiligen Optik 3 bzw. 4 abgewandten Seite des jeweiligen Trägers 5' bzw. 5" angeordnet, wodurch wie bereits zu Figur 3 beschrieben ein zusätzlicher Freiheitsgrad bei der Ausgestaltung der jeweiligen Optik 3 bzw. 4 durch geeignete Wahl der Trägerdicke gewonnen wird. Figur 5 (a) zeigt den ersten Träger 5', Figur 5 (b) eine daran angebrachte erste Blendenvorrichtung 9a, Figur 5 (c) den Träger 5' gemäß Figuren 5 (a) und (b) von einer gegenüberliegenden Seite, an der die Eintrittsoptik 3 angebracht wird, Figur 5 (d) den Träger 5' mit einer befestigten Eintrittsoptik 3, Figur 5 (e) den zweiten Träger 5", Figur 5 (f) den zweiten Träger 5" mit einer auf diesen aufgebrachten zweiten Blendenvorrichtung 9b, Figur (g) den dritten Träger 5''', der auf den zweiten Träger 5" aufgebracht wird (Figur 5 (h)), wobei an den zweiten Träger 5" eine Austrittsoptik 4 angebracht wird (Figuren 5 (i) und (j)), und die verbleibende freie Seite des dritten Trägers 5"' mit der verbleibenden freien Seite des ersten Trägers 5' verbunden wird (Figur 5 (k) sowie Figur 5 (l)).

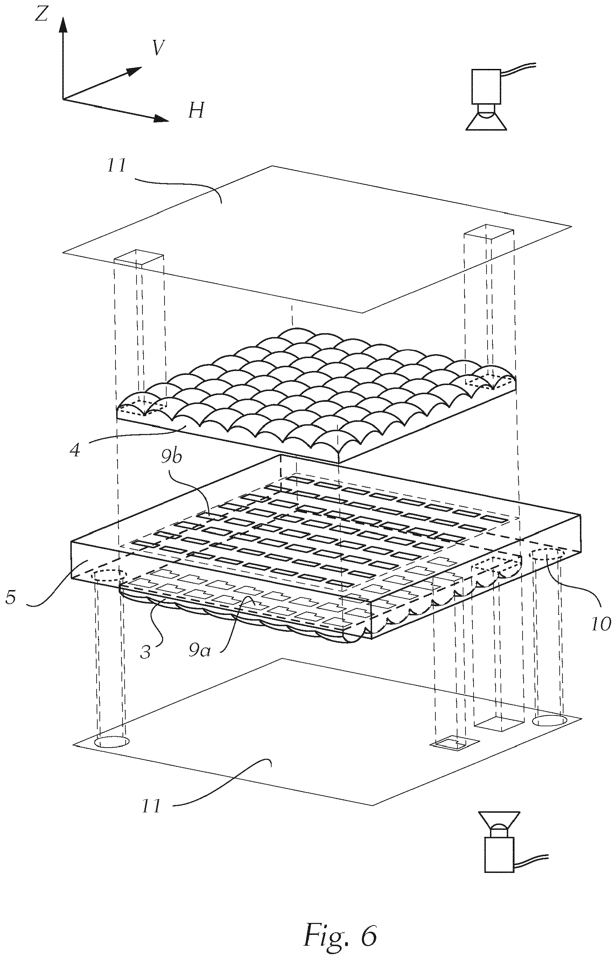

Figur 6 zeigt eine Darstellung einer Möglichkeit zur besonders exakten Positionierung der Eintritts- 3 und der Austrittsoptik 4 sowie der Blendenvorrichtungen 9a und 9b. Zu diesem Zweck wird die Projektionseinrichtung 1 gezielt beleuchtet, wenn z.B. die Austrittsoptik 4 auf den Träger 5 bzw. über die Blendenvorrichtung 9b aufgesetzt werden soll. Die Erfahrung hat gezeigt, dass die Positionierung der Austrittsoptik 4 in Bezug auf die Blendenvorrichtung 9b besonders kritisch für die Vermeidung von unerwünschten Abbildungsfehlern ist und die Toleranzempfindlichkeit in diesem Schritt am höchsten ist und Abweichungen weniger als 20 um betragen sollen. Deshalb kann es vorgesehen sein, dass einerseits Positionsmarken 10 vorgesehen sind, die an dem Träger 5 angeordnet oder auf diesen projiziert werden und optisch erfasst werden können, um bei der Anbringung der Austrittsoptik 4 als Referenz herangezogen werden zu können. Alternativ oder ergänzend dazu können ebenso die Blendenvorrichtungen 9a oder 9b oder die Linsenkontur der Optiken 3 oder 4 selbst optisch erfasst und als Referenz herangezogen werden. Natürlich kann das Referenzieren ebenso bei der Anbringung der anderen vorgenannten Komponenten, wie beispielsweise der Eintrittsoptik 3 oder der Blendenvorrichtungen 9a oder 9b erfolgen. Auch müssen die Blendenvorrichtungen 9a und/oder 9b nicht zwingend vorgesehen sein. Zu dem Zweck der besseren Sichtbarmachung der Referenzmerkmale wie z.B. der Positionsmarken oder der Blendenvorrichtungen 9a und/oder 9b kann vorgesehen sein, dass die Projektionseinrichtung 1 beleuchtet, insbesondere durchleuchtet, wird, wobei zur gezielten Beleuchtung beispielsweise Beleuchtungsmasken 11 vorgesehen sein können, die auf die Projektionseinrichtung 1 eingestrahltes Licht gezielt vorgeben bzw. begrenzen. Alternativ dazu kann das Bezugszeichen 11 ebenso eine Bildebene einer Erkennungseinrichtung darstellen, in die die jeweiligen Marken oder Merkmale zur Ausrichtung der einzelnen Komponenten abgebildet werden.

Durch die erfindungsgemäße Projektionseinrichtung 1 können Abbildungsfehler von Licht, dass über die Eintrittsoptik 3 in die Austrittsoptik 4 eintritt und über diese beispielsweise auf eine Fahrbahn projiziert wird, weitgehend vermieden werden.

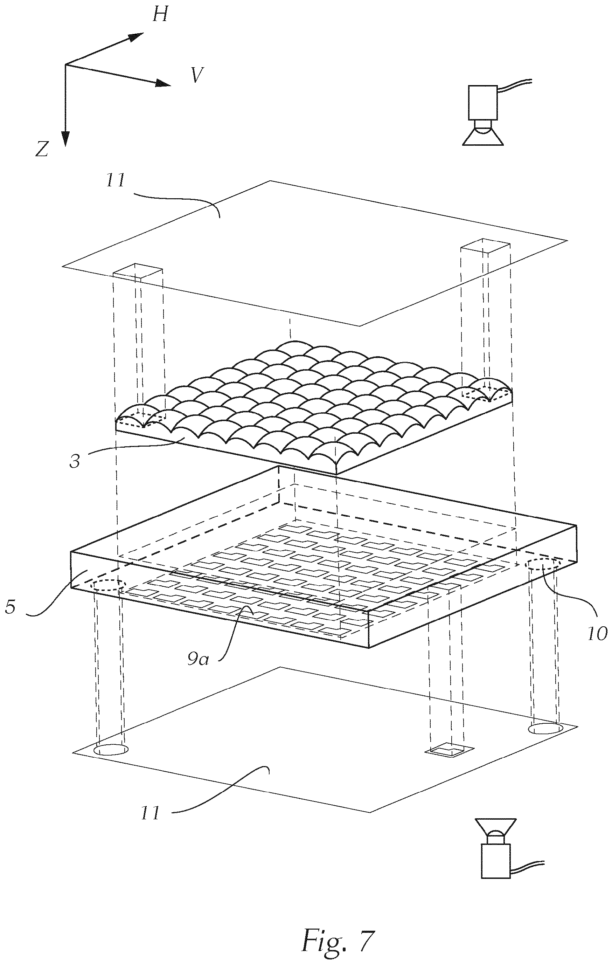

Figur 7 zeigt eine Darstellung einer Möglichkeit zur exakten Positionierung einer Eintrittsoptik 3 auf einen ersten Träger 5', wie dies beispielsweise bei einer Projektionseinrichtung 1 gemäß Figur 5 (c) erfolgen kann, wobei ähnlich wie bereits zur Figur 6 Positionsmarken 10 und oder andere Referenzmerkmale optisch erfasst und zur Ausrichtung der einzelnen Komponenten zueinander herangezogen werden können.

In Anbetracht dieser Lehre ist der Fachmann in der Lage, ohne erfinderisches Zutun zu anderen, nicht gezeigten Ausführungsformen der Erfindung zu gelangen. Die Erfindung ist daher nicht auf die gezeigten Ausführungsformen beschränkt. Auch können einzelne Aspekte der Erfindung bzw. der Ausführungsformen aufgegriffen und miteinander kombiniert werden. Der Umfang der Erfindung wird ausschließlich durch den Gegenstand der anhängenden Ansprüche eingeschränkt.

## Patentansprüche

1. Projektionseinrichtung (1) für einen Kraftfahrzeugscheinwerfer, wobei die Projektionseinrichtung (1) zur Abbildung von Licht zumindest einer der Projektionseinrichtung (1) zugeordneten Lichtquelle (2) in einem Bereich vor einem Kraftfahrzeug in Form zumindest einer Lichtverteilung eingerichtet ist, wobei die Projektionseinrichtung (1) umfasst:
- eine Eintrittsoptik (3), welche eine Anzahl von Mikro-Eintrittsoptiken (3a) aufweist, welche vorzugsweise in einem Array angeordnet sind,
- eine Austrittsoptik (4), welche eine Anzahl von Mikro-Austrittsoptiken (4a) aufweist, welche vorzugsweise in einem Array angeordnet sind, wobei
jeder Mikro-Eintrittsoptik (3a) genau eine Mikro-Austrittsoptik (4a) zugeordnet ist,
wobei die Mikro-Eintrittsoptiken (3a) derart ausgebildet und/oder die Mikro-Eintrittsoptiken (3a) und die Mikro-Austrittsoptiken (4a) derart zueinander angeordnet sind, dass im Wesentlichen das gesamte aus einer Mikro-Eintrittsoptik (3a) austretende Licht nur in die zugeordnete Mikro-Austrittsoptik (4a) eintritt, und wobei
das von den Mikro-Eintrittsoptiken (3a) vorgeformte Licht von den Mikro-Austrittsoptiken (4a) in einen Bereich vor dem Kraftfahrzeug als zumindest eine Lichtverteilung abgebildet wird,
wobei die Eintrittsoptik (3) als auch die Austrittsoptik (4) mit zumindest einem zwischen der Eintrittsoptik (3) und der Austrittsoptik (4) angeordneten lichtdurchlässigen Träger (5, 5', 5") fest verbunden sind, wobei der zumindest eine Träger (5, 5', 5") zumindest teilweise aus Glas besteht, **dadurch gekennzeichnet, dass** zwischen der Eintrittsoptik (3) und der Austrittsoptik (4) zwei einander gegenüberliegende zur verbesserten Kühlung der Optiken (3, 4) zueinander beabstandete Träger (5', 5") angeordnet sind, wobei die Eintrittsoptik (3) und die Austrittsoptik (4) mit jeweils einem der Träger (5', 5") mittels eines lichtdurchlässigen Klebstoffes fest verbunden sind.

2. Projektionseinrichtung (1) nach Anspruch 1, wobei die Eintrittsoptik (3) und die Austrittsoptik (4) jeweils zumindest eine optische Achse aufweisen, wobei die optischen Achsen parallel zueinander orientiert sind, wobei einer der beiden Träger (5', 5") in Bezug auf den verbleibenden Träger (5) normal zu einer der optischen Achsen verschiebbar ist.

3. Projektionseinrichtung (1) nach Anspruch 1, wobei die Dicke der Klebeverbindung in Richtung der optischen Achse der Eintritts- oder Austrittsoptik (3, 4) maximal 20 um beträgt und das Verhältnis der Brechungsindizes des für die Klebeverbindung eingesetzten Materials im ausgehärteten Zustand der Klebeverbindung und des Materials des Trägers zwischen 0,9 und 1,1 liegt.

4. Projektionseinrichtung (1) nach einem der vorhergehenden Ansprüche, wobei auf der der Eintrittsoptik (3) zugewandten Seite (5a) zumindest eines Trägers (5, 5') eine Blendenvorrichtung (9a) angeordnet ist.

5. Projektionseinrichtung (1) nach einem der vorhergehenden Ansprüche, wobei auf einer von der Eintrittsoptik (3) abgewandten Seite (5b) zumindest eines Trägers (5, 5') eine Blendenvorrichtung (9a) angeordnet ist.

6. Projektionseinrichtung (1) nach einem der vorhergehenden Ansprüche, wobei auf der der Austrittsoptik (4) zugewandten Seite (5b) zumindest eines Trägers (5, 5', 5") eine Blendenvorrichtung (9a, 9b) angeordnet ist.

7. Projektionseinrichtung (1) nach einem der vorhergehenden Ansprüche, wobei auf der der Austrittsoptik (4) abgewandten Seite (5b) zumindest eines Trägers (5, 5', 5") eine Blendenvorrichtung (9a, 9b) angeordnet ist.

8. Projektionseinrichtung (1) nach einem der Ansprüche 4 bis 7, wobei zumindest eine Blendenvorrichtung (9a, 9b) als eine auf den zumindest einen Träger (5, 5', 5") aufgedampfte lichtundurchlässige Metallschicht zur Formung des Lichtbildes der Projektionseinrichtung (1) ausgebildet ist, oder zumindest eine Blendenvorrichtung (9a, 9b) als eine auf den zumindest einen Träger (5, 5', 5") aufgedruckte lichtundurchlässige Lackschicht zur Formung des Lichtbildes der Projektionseinrichtung (1) ausgebildet ist.

9. Projektionseinrichtung (1) nach einem der vorhergehenden Ansprüche, wobei der Träger (5, 5', 5") vollständig aus transparenten Glas besteht.

10. Projektionseinrichtung (1) nach einem der vorhergehenden Ansprüche, wobei die Mikro-Eintrittsoptik (3a) und/oder die Mikro-Austrittsoptik (4a) aus Kunststoff besteht.

11. Mikroprojektions-Lichtmodul (6) für einen Kraftfahrzeugscheinwerfer, umfassend zumindest eine Projektionseinrichtung (1) nach einem der vorhergehenden Ansprüche sowie zumindest eine Lichtquelle (2) zur Einspeisung von Licht in die Projektionseinrichtung (1).

12. Fahrzeugscheinwerfer, insbesondere Kraftfahrzeugscheinwerfer, umfassend zumindest eine Projektionseinrichtung nach einem der Ansprüche 1 bis 10 und/oder zumindest ein Mikroprojektions-Lichtmodul (6) nach Anspruch 11.

13. Fahrzeug, insbesondere Kraftfahrzeug, mit zumindest einem Fahrzeugscheinwerfer nach Anspruch 12.

14. Verfahren zur Herstellung einer Projektionseinrichtung (1) für einen Kraftfahrzeugscheinwerfer, wobei die Projektionseinrichtung (1) zur Abbildung von Licht zumindest einer der Projektionseinrichtung (1) zugeordneten Lichtquelle (2) in einem Bereich vor einem Kraftfahrzeug in Form zumindest einer Lichtverteilung eingerichtet ist, **gekennzeichnet durch** die folgenden Schritte:
a) Aufbringen einer ersten Blendenvorrichtung (9a) auf einer ersten Flachseite (5a) oder einer zweiten Flachseite (5b) eines flächigen lichtdurchlässigen Trägers, wobei der Träger (5) zumindest teilweise aus Glas besteht,
b) Befestigen oder Aufbringen einer Eintrittsoptik (3), welche eine Anzahl von Mikro-Eintrittsoptiken (3a) aufweist, welche vorzugsweise in einem Array angeordnet sind, auf der ersten Flachseite (5a) des Trägers (5, 5'), wobei die Eintrittsoptik (3) die erste Blendenvorrichtung (9a) zumindest teilweise überdeckt und dergestalt angeordnet ist, dass Licht über die Eintrittsoptik (3) durch die erste Blendenvorrichtung (9a) zumindest teilweise in den zumindest Träger (5, 5') eintreten oder nach Ein- und Durchtritt durch den Träger (5, 5') durch die erste Blendenvorrichtung zumindest teilweise austreten kann, und die Befestigung der Eintrittsoptik (3) an der ersten Flachseite (5a) des zumindest einen Trägers (5, 5') mittels eines lichtdurchlässigen Klebstoffes erfolgt,
c) Aufbringen einer zweiten Blendenvorrichtung (9a, 9b) auf einer der ersten Flachseite (5a) gegenüberliegenden zweiten Flachseite (5b) auf einer Flachseite eines weiteren Trägers (5"),
d) Befestigen oder Aufbringen einer Austrittsoptik (4), welche eine Anzahl von Mikro-Austrittsoptiken (4a) aufweist, welche vorzugsweise in einem Array angeordnet sind, auf der zweiten Flachseite (5b) des weiteren Trägers (5"), wobei die Austrittsoptik (4) die zweite Blendenvorrichtung (9b) zumindest teilweise überdeckt und dergestalt angeordnet ist, dass den weiteren Träger (5") durchdringendes Licht über die zweite Blendenvorrichtung (9b) in die Austrittsoptik (4) eintreten und durch die Austrittsoptik (4) hindurch austreten kann oder über die zweite Blendenvorrichtung (9b) in den weiteren Träger (5") eintretendes Licht durch den weiteren Träger (5") durchtreten und durch Austrittsoptik (4) austreten kann und die Befestigung der Austrittsoptik (4) an einer Flachseite des weiteren Trägers (5") mittels eines lichtdurchlässigen Klebstoffes erfolgt, wobei vorzugsweise vorgesehen ist, dass vor der Durchführung des Schritts b) die Position der ersten Blendenvorrichtung (9a) optisch erfasst wird und die Befestigung der Eintrittsoptik (3) gemäß dem nachfolgenden Schritt b) unter Berücksichtigung der optischen Erfassung der Position der ersten Blendenvorrichtung (9a) erfolgt.

15. Verfahren nach Anspruch 14, wobei vor der Durchführung des Schritts d) die Position der zweiten Blendenvorrichtung (9b) optisch erfasst wird und die Befestigung der Austrittsoptik (4) gemäß dem nachfolgenden Schritt d) unter Berücksichtigung der optischen Erfassung der Position der zweiten Blendenvorrichtung (9b) erfolgt, wobei vorzugsweise die Dicke der Klebeverbindung in Richtung einer optischen Achse der Eintritts- (3) oder Austrittsoptik (4) maximal 20 um beträgt und das Verhältnis der Brechungsindizes des für die Klebeverbindung eingesetzten Materials im ausgehärteten Zustand der Klebeverbindung und des Materials des Trägers zwischen 0,9 und 1,1 liegt.

## Claims

1. Projection device (1) for a motor vehicle headlamp, the projection device (1) being set up for imaging light from at least one light source (2) associated with the projection device (1) in an area in front of a motor vehicle in the form of at least one light distribution, the projection device (1) comprising:
- an entrance optics (3), which has a number of micro-entrance optics (3a), which are preferably arranged in an array,
- an exit optics (4) comprising a number of micro-exit optics (4a), preferably arranged in an array, wherein
each micro-entry optics (3a) is associated with exactly one micro-exit optics (4a),
wherein the micro-entry optics (3a) are configured and/or the micro-entry optics (3a) and the micro-exit optics (4a) are arranged relative to one another in such a way that substantially all of the light emerging from a micro-entry optic (3a) enters only the associated micro-exit optic (4a), and wherein
the light preformed by the micro-entry optics (3a) is imaged by the micro-exit optics (4a) into an area in front of the motor vehicle as at least one light distribution,
wherein the entrance optics (3) as well as the exit optics (4) are fixedly connected to at least one light-transmitting carrier (5, 5', 5") arranged between the entrance optics (3) and the exit optics (4), wherein the at least one carrier (5, 5', 5") consists at least partially of glass, **characterized in that** the at least one carrier (5, 5', 5") consists at least partially of glass, **in that** two mutually opposite supports (5', 5") spaced apart from one another for improved cooling of the optics (3, 4) are arranged between the entrance optics (3) and the exit optics (4), the entrance optics (3) and the exit optics (4) each being firmly connected to one of the supports (5', 5") by means of a light-transmitting adhesive.

2. Projection device (1) according to claim 1, wherein the entrance optics (3) and the exit optics (4) each have at least one optical axis, wherein the optical axes are oriented parallel to one another, wherein one of the two carriers (5', 5") is displaceable with respect to the remaining carrier (5) normal to one of the optical axes.

3. Projection device (1) according to claim 1, wherein the thickness of the adhesive joint in the direction of the optical axis of the entrance or exit optics (3, 4) is at most 20 um and the ratio of the refractive indices of the material used for the adhesive joint in the cured state of the adhesive joint and of the material of the carrier is between 0.9 and 1.1.

4. Projection device (1) according to one of the preceding claims, wherein an aperture device (9a) is arranged on the side (5a) of at least one carrier (5, 5') facing the entrance optics (3).

5. Projection device (1) according to one of the preceding claims, wherein a diaphragm device (9a) is arranged on a side (5b) of at least one carrier (5, 5') facing away from the entrance optics (3).

6. Projection device (1) according to one of the preceding claims, wherein a diaphragm device (9a, 9b) is arranged on the side (5b) of at least one carrier (5, 5', 5") facing the exit optics (4).

7. Projection device (1) according to one of the preceding claims, wherein a diaphragm device (9a, 9b) is arranged on the side (5b) of at least one carrier (5, 5', 5") facing away from the exit optics (4).

8. Projection device (1) according to one of claims 4 to 7, wherein at least one diaphragm device (9a, 9b) is formed as an opaque metal layer vapor-deposited onto the at least one carrier (5, 5', 5") for forming the light image of the projection device (1), or at least one diaphragm device (9a, 9b) is formed as an opaque lacquer layer printed onto the at least one carrier (5, 5', 5") for forming the light image of the projection device (1).

9. Projection device (1) according to one of the preceding claims, wherein the carrier (5, 5', 5") consists entirely of transparent glass.

10. Projection device (1) according to one of the preceding claims, wherein the micro-entry optics (3a) and/or the micro-exit optics (4a) are made of plastic.

11. Micro-projection light module (6) for a motor vehicle headlamp, comprising at least one projection device (1) according to one of the preceding claims and at least one light source (2) for feeding light into the projection device (1).

12. Vehicle headlamp, in particular motor vehicle headlamp, comprising at least one projection device according to one of claims 1 to 10 and/or at least one microprojection light module (6) according to claim 11.

13. Vehicle, in particular motor vehicle, comprising at least one vehicle headlight according to claim 12.

14. Method for producing a projection device (1) for a motor vehicle headlamp, the projection device (1) being set up for imaging light from at least one light source (2) assigned to the projection device (1) in a region in front of a motor vehicle in the form of at least one light distribution, **characterized by** the following steps:
a) applying a first diaphragm device (9a) to a first flat side (5a) or a second flat side (5b) of a sheet-like light-transmitting support, the support (5) consisting at least partially of glass,
b) fixing or applying an entrance optic (3), which has a number of micro-entrance optics (3a), which are preferably arranged in an array, to the first flat side (5a) of the carrier (5, 5'), the entrance optic (3) at least partially covering the first diaphragm device (9a) and being arranged in such a manner that light can at least partially enter the at least one carrier (5, 5') via the entry optics (3) through the first diaphragm device (9a) or can at least partially exit the first diaphragm device after entering and passing through the carrier (5, 5'), and the attachment of the entry optics (3) to the first flat side (5a) of the at least one carrier (5, 5') is effected by means of a light-transmitting adhesive,
c) applying a second diaphragm device (9a, 9b) to a second flat side (5b) opposite the first flat side (5a) on a flat side of a further carrier (5"),
d) fastening or applying an exit optic (4), which has a number of micro exit optics (4a), which are preferably arranged in an array, on the second flat side (5b) of the further carrier (5"), the exit optic (4) at least partially covering the second diaphragm device (9b) and being arranged in such a manner that light penetrating the further carrier (5") can enter the exit optics (4) via the second diaphragm device (9b) and exit through the exit optics (4), or light entering the further carrier (5") via the second diaphragm device (9b) can pass through the further carrier (5") and exit through the exit optics (4), and the fastening of the exit optics (4) to a flat side of the further carrier (5") is effected by means of a light-permeable adhesive, wherein it is preferably provided that before carrying out step b) the position of the first aperture device (9a) is optically detected and the attachment of the entrance optics (3) is carried out according to the subsequent step b) taking into account the optical detection of the position of the first aperture device (9a).

15. Method according to claim 14, wherein prior to performing step d), the position of the second aperture device (9b) is optically detected and the attachment of the exit optics (4) is performed according to the subsequent step d) taking into account the optical detection of the position of the second aperture device (9b), wherein preferably the thickness of the adhesive joint in the direction of an optical axis of the entrance (3) or exit optics (4) is at most20 um and the ratio of the refractive indices of the material used for the adhesive joint in the cured state of the adhesive joint and of the material of the carrier is between 0.9 and 1.1.

## Revendications

1. Dispositif de projection (1) pour un phare de véhicule automobile, le dispositif de projection (1) étant conçu pour reproduire la lumière d'au moins une source lumineuse (2) associée au dispositif de projection (1) dans une zone située à l'avant d'un véhicule automobile sous la forme d'au moins une répartition lumineuse, le dispositif de projection (1) comprenant :
- une optique d'entrée (3), qui comporte un certain nombre d'optiques de micro-entrée (3a), qui sont de préférence disposées en réseau,
- une optique de sortie (4) comprenant un certain nombre de micro-optiques de sortie (4a) disposées de préférence en réseau, dans laquelle
chaque optique de micro-entrée (3a) est associée à exactement une optique de micro-sortie (4a),
dans lequel l'optique de micro-entrée (3a) est conçue de telle manière et/ou l'optique de micro-entrée (3a) et l'optique de micro-sortie (4a) sont disposées l'une par rapport à l'autre de telle manière que sensiblement toute la lumière sortant d'une optique de micro-entrée (3a) ne pénètre que dans l'optique de micro-sortie (4a) associée, et dans lequel
la lumière préformée par la micro-optique d'entrée (3a) est représentée par la micro-optique de sortie (4a) dans une zone située à l'avant du véhicule automobile sous la forme d'au moins une répartition lumineuse
l'optique d'entrée (3) ainsi que l'optique de sortie (4) étant reliées de manière fixe à au moins un support (5, 5', 5") transmettant la lumière, disposé entre l'optique d'entrée (3) et l'optique de sortie (4), le au moins un support (5, 5', 5") étant constitué au moins partiellement de verre, **caractérisé en ce que en ce que** deux supports (5', 5") opposés l'un à l'autre et espacés l'un de l'autre pour un meilleur refroidissement de l'optique (3, 4) sont disposés entre l'optique d'entrée (3) et l'optique de sortie (4), l'optique d'entrée (3) et l'optique de sortie (4) étant chacune reliée solidement à l'un des supports (5', 5") au moyen d'un adhésif transmettant la lumière.

2. Dispositif de projection (1) selon la revendication 1, dans lequel l'optique d'entrée (3) et l'optique de sortie (4) ont chacune au moins un axe optique, dans lequel les axes optiques sont orientés parallèlement l'un à l'autre, dans lequel l'un des deux supports (5', 5") est déplaçable par rapport au support restant (5) normalement à l'un des axes optiques.

3. Dispositif de projection (1) selon la revendication 1, dans lequel l'épaisseur du joint adhésif dans la direction de l'axe optique de l'optique d'entrée ou de sortie (3, 4) est au maximum de 20 um et le rapport des indices de réfraction du matériau utilisé pour le joint adhésif à l'état durci du joint adhésif et du matériau du support est compris entre 0,9 et 1,1.

4. Dispositif de projection (1) selon l'une des revendications précédentes, dans lequel un dispositif à diaphragme (9a) est disposé sur la face (5a) d'au moins un support (5, 5') tournée vers l'optique d'entrée (3).

5. Dispositif de projection (1) selon l'une des revendications précédentes, dans lequel un dispositif à diaphragme (9a) est disposé sur un côté (5b) d'au moins un support (5, 5') opposé à l'optique d'entrée (3).

6. Dispositif de projection (1) selon l'une des revendications précédentes, dans lequel un dispositif à diaphragme (9a, 9b) est disposé sur la face (5b) d'au moins un support (5, 5', 5") tournée vers l'optique de sortie (4).

7. Dispositif de projection (1) selon l'une des revendications précédentes, dans lequel un dispositif à diaphragme (9a, 9b) est disposé sur le côté (5b) d'au moins un support (5, 5', 5") opposé à l'optique de sortie (4).

8. Dispositif de projection (1) selon l'une des revendications 4 à 7, dans lequel au moins un dispositif de diaphragme (9a, 9b) est formé en tant que couche métallique opaque déposée en phase vapeur sur le au moins un support (5, 5', 5") pour former l'image lumineuse du dispositif de projection (1), ou au moins un dispositif de diaphragme (9a, 9b) est formé en tant que couche de laque opaque imprimée sur le au moins un support (5, 5', 5") pour former l'image lumineuse du dispositif de projection (1).

9. Dispositif de projection (1) selon l'une quelconque des revendications précédentes, dans lequel le support (5, 5', 5") est entièrement constitué de verre transparent.

10. Dispositif de projection (1) selon l'une quelconque des revendications précédentes, dans lequel les micro-optiques d'entrée (3a) et/ou les micro-optiques de sortie (4a) sont réalisées en matière plastique.

11. Module lumineux de micro-projection (6) pour projecteur de véhicule automobile, comprenant au moins un dispositif de projection (1) selon l'une des revendications précédentes et au moins une source lumineuse (2) pour alimenter en lumière le dispositif de projection (1).

12. Projecteur de véhicule, en particulier projecteur de véhicule automobile, comprenant au moins un dispositif de projection selon l'une des revendications 1 à 10 et/ou au moins un module lumineux de microprojection (6) selon la revendication 11.

13. Véhicule, notamment véhicule automobile, comprenant au moins un phare de véhicule selon la revendication 12.

14. Procédé de fabrication d'un dispositif de projection (1) pour un phare de véhicule automobile, le dispositif de projection (1) étant conçu pour reproduire la lumière d'au moins une source lumineuse (2) associée au dispositif de projection (1) dans une zone située à l'avant d'un véhicule automobile sous la forme d'au moins une répartition lumineuse, **caractérisé par** les étapes suivantes :
a) appliquer un premier dispositif de diaphragme (9a) sur un premier côté plat (5a) ou un second côté plat (5b) d'un support de transmission de la lumière en forme de feuille, le support (5) étant constitué au moins partiellement de verre,
b) la fixation ou l'application d'une optique d'entrée (3), qui présente un certain nombre d'optiques de micro-entrée (3a), qui sont de préférence disposées en réseau, sur le premier côté plat (5a) du support (5, 5'), l'optique d'entrée (3) recouvrant au moins partiellement le premier dispositif à diaphragme (9a) et étant disposée de telle sorte que que la lumière peut pénétrer au moins partiellement dans l'au moins un support (5, 5') par l'intermédiaire de l'optique d'entrée (3) à travers le premier dispositif à diaphragme (9a) ou peut sortir au moins partiellement du premier dispositif à diaphragme après avoir pénétré et traversé le support (5, 5'), et la fixation de l'optique d'entrée (3) sur le premier côté plat (5a) de l'au moins un support (5, 5') est effectuée au moyen d'un adhésif transmettant la lumière,
c) appliquer un deuxième dispositif à diaphragme (9a, 9b) sur un deuxième côté plat (5b) opposé au premier côté plat (5a) sur un côté plat d'un autre support (5"),
d) fixation ou application d'une optique de sortie (4), qui présente un certain nombre de micro-optiques de sortie (4a) disposées de préférence en réseau, sur le deuxième côté plat (5b) de l'autre support (5"), l'optique de sortie (4) recouvrant au moins partiellement le deuxième dispositif à diaphragme (9b) et étant disposée de telle sorte que que la lumière pénétrant dans l'autre support (5") peut entrer dans l'optique de sortie (4) par le deuxième dispositif à diaphragme (9b) et sortir par l'optique de sortie (4), ou que la lumière entrant dans l'autre support (5") par le deuxième dispositif à diaphragme (9b) peut traverser l'autre support (5") et sortir par l'optique de sortie (4), et la fixation de l'optique de sortie (4) sur un côté plat de l'autre support (5") s'effectue au moyen d'un adhésif transparent, dans lequel il est de préférence prévu qu'avant de réaliser l'étape b), la position du premier dispositif d'ouverture (9a) est détectée optiquement et la fixation de l'optique d'entrée (3) est réalisée selon l'étape b) suivante en tenant compte de la détection optique de la position du premier dispositif d'ouverture (9a).

15. Procédé selon la revendication 14, dans lequel, avant la mise en œuvre de l'étape d), la position du deuxième dispositif d'ouverture (9b) est détectée optiquement et la fixation de l'optique de sortie (4) est réalisée selon l'étape d) suivante en tenant compte de la détection optique de la position du deuxième dispositif d'ouverture (9b), dans lequel, de préférence, l'épaisseur du joint adhésif dans la direction d'un axe optique de l'optique d'entrée (3) ou de sortie (4) est au maximum de 20 um et le rapport des indices de réfraction du matériau utilisé pour le joint adhésif à l'état durci du joint adhésif et du matériau du support est compris entre 0,9 et 1,1.
